# EUROPÄISCHE PATENTSCHRIFT

(11) **EP 1 894 783 B1**
(45) Veröffentlichungstag und Bekanntmachung des Hinweises auf die Patenterteilung: **10.02.2010**
(21) Anmeldenummer: 07014029.8
(22) Anmeldetag: 18.07.2007
(51) Int. Cl.: B60R 5/04, B60R 9/10, B62D 43/04

(54) **Kraftfahrzeug mit einem Entriegelungsauslöser für einen heckseitig ausziehbaren Lastenträger**
Motor vehicle with a release actuator for a extendable rear carrier
Véhicule automobile doté d'un déclencheur de déverrouillage pour un support de charge pouvant être extrait par les coins

(30) Priorität: 29.08.2006 DE 102006040390
(43) Veröffentlichungstag der Anmeldung: 05.03.2008
(73) Patentinhaber: GM Global Technology Operations, Inc., Detroit, MI 48265-3000 (US)
(72) Erfinder: Ahlburg, Ralf, 67294 Gauersheim (DE)
(74) Vertreter: Daniel, Ulrich W.P.

(56) Entgegenhaltungen:
- EP-A- 1 155 912
- DE-A1- 10 231 963
- US-A- 2 284 419
- US-A- 5 150 939
- US-A- 5 692 792

## Beschreibung

Die Erfindung bezieht sich auf ein Kraftfahrzeug mit einem Entriegelungsauslöser für einen heckseitig ausziehbaren Lastenträger, der im eingeschobenen und ausgezogenen Zustand mittels Arretiermitteln fixiert ist, die mit dem Entriegelungsauslöser in Wirkverbindung stehen, und einer gegen eine eine Verkleidung aufweisende Rückwand anliegenden Heckklappe zum Verschließen einer Heckklappenöffnung.

Aus der US-A-4 676 415 und der DE 102 31 963 A1 sind ausziehbare Lastenträger an einem Kraftfahrzeug bekannt, die aus dem Heck des Kraftfahrzeugs unter dem gewöhnlichen Laderaum als doppelter Ladeboden herausgezogen werden. Diese Lastenträger können zum einen ein Ersatzrad für das Kraftfahrzeug aufnehmen und dienen zum anderen als Fahrradträger bzw. als Träger einer Gepäckbox. Der Lastenträger ist üblicherweise auf zwei Schienen gelagert und wird mit Bolzen in einer eingeschobenen Stellung arretiert. Vor allem ein als Fahrradträger oder als Träger einer Gepäckbox ausgebildeter Lastenträger weist eine ausgezogene arretierbare Stellung auf, in der der Lastenträger zur Fahrradaufnahme vollständig unter dem Heck des Kraftfahrzeugs herausgezogen ist.

Bei dem Lastenträger gemäß der DE 102 31 963 A1 fährt bei Betätigung einer Entriegelungsmechanik die Lastenaufnahme aus einer eingefahrenen Stellung in Richtung der Betriebsstellung aufgrund eines durch eine Feder vorgespannten Auswerfers. Die Entriegelungsmechanik umfasst einen Bowdenzug, der an der Arretiereinrichtung am Lastenträger angreift. Die Fixier- bzw. Arretiereinrichtung kann durch Betätigung des Bowdenzugs vom Fahrersitz aus in eine Freigabestellung geschaltet werden. In einer alternativen Ausführungsform kann die Entriegelungsmechanik auch ein auf die Fixiereinrichtung wirkendes Magnetventil umfassen, so dass die Fixiereinrichtung durch Betätigung eines Schalters auf elektrischem Wege in die Freigabestellung geschaltet werden kann.

Ferner offenbart die US-A-5 692 792 ein Kraftfahrzeug mit einem Entriegelungsauslöser für einen heckseitig ausziehbaren Lastenträger, nach dem Oberbegriff des Anspruchs 1, der im eingeschobenen und ausgezogenen Zustand mittels Arretiermitteln fixiert ist, wobei die Arretiermittel für den eingeschobenen Zustand mit dem Entriegelungsauslöser in Wirkverbindung stehen, und einer gegen eine Rückwand anliegenden Heckklappe zum Verschließen einer Heckklappenöffnung.

Schließlich ist aus der EP 1 155 912 A2 ein Kraftfahrzeug mit einem Entriegelungsauslöser für einen heckseitig ausziehbaren Lastenträger bekannt.

Unter Arretiermitteln die den Lastenträger im eingeschobenen und ausgezogenen Zustand fixieren, werden sämtliche mechanischen oder elektromechanischen bzw. pneumatischen Mittel verstanden, die eine Beaufschlagung eines von den Arretiermitteln umfassten Schlosses zur Fixierung bzw. Freigabe des Lastenträgers bewirken. Bei den mechanischen Mitteln kann es sich beispielsweise um eine bzw. mehrere Spiralfedern oder um eine kurze, schiefe Ebene handeln, auf der der Lastenträger mittels Rollen läuft und dessen Gewichtskraft die notwendige Druckkraft auf das Entriegelungsschloss schafft. Nach dem Öffnen des Entriegelungsschlosses mittels des Entriegelungsauslösers bewegt sich der Lastenträger leicht und kurz heckseitig unter dem Kraftfahrzeug heraus, wonach der Lastenträger ergriffen und soweit wie erforderlich aus dem Fahrzeugheck gezogen werden kann.

Es ist Aufgabe der Erfindung, ein Kraftfahrzeug der eingangs genannten Art zu schaffen, dessen Entriegelungsauslöser mit minimalem technischen Aufwand bei einer verbesserten Handhabbarkeit, auch bei einem voll beladenen Laderaum, einsetzbar ist.

Erfindungsgemäß wird die Aufgabe dadurch gelöst, dass der Entriegelungsauslöser in der Verkleidung der Rückwand im unteren Bereich der Heckklappenöffnung, in einem einer Unterkante der Heckklappe zugeordneten Falzbereich der Rückwand angeordnet ist, wobei der Falzbereich bei geschlossener Heckklappe durch dieselbe abgedeckt ist.

Kerngedanke der Erfindung ist, den Entriegelungsauslöser am Kraftfahrzeug dort zu positionieren, wo ein Benutzer des Kraftfahrzeuges dasselbe belädt bzw. entlädt. Der Entriegelungsauslöser ist, um einen Missbrauch vorzubeugen, selbstverständlich im Inneren des Kraftfahrzeugs angeordnet und kann demnach nicht von Außen betätigt werden, um den Lastenträger zum Herausziehen freizugeben. Zur Verbesserung der Ergonomie ist der Entriegelungsauslöser im unteren Bereich der Heckklappenöffnung vorgesehen, was den weiteren Vorteil mit sich bringt, dass ein lästiges Beugen des Oberkörpers des Benutzers, möglicherweise tief in den Kofferraum hinein, überflüssig ist. Der Falzbereich ist Bestandteil des die Heckklappenöffnung umfangsseitig begrenzenden äußeren Heckklappen-Aufnahmerahmens, auf dem die Heckklappe im geschlossenen Zustand aufliegt und der von der Verkleidung überdeckt ist. Der im geöffneten Zustand der Heckklappe sichtbare Falzbereich wird im geschlossen Zustand der Heckklappe von dieser überdeckt und ist somit nicht Bestandteil des zu beladenden Bereichs des Laderaums, weshalb der Entriegelungsauslöser in der Nähe zum Fahrzeugäußeren angeordnet ist und insbesondere nicht durch Transportgut verdeckt werden kann, da dieser Bereich zum Schließen der Heckklappe frei bleiben muss. Der Fahrzeugbenutzer kann bei einem gefüllten Lade- bzw. Kofferraum stets den Entriegelungsauslöser betätigen und anschließend den freigegebenen Lastenträger aus dem Fahrzeugheck ziehen, ohne den Kofferraum zumindest teilweise entladen zu müssen.

Da gewöhnlich mittig eine Heckklappenschließvorrichtung an der Fahrzeugkarosserie angeordnet ist, ist der Entriegelungsauslöser entweder links oder rechts seitlich von dieser Heckklappenschließvorrichtung angeordnet. Der Entriegelungsauslöser befindet sich bei geöffneter Heckklappe in einem sichtbaren Bereich für den Fahrzeugbenutzer und ist leicht zugänglich.

Alternativ wird die Aufgabe auch dadurch gelöst, dass die Heckklappe als Heckscheibe ausgebildet ist oder eine klappbare Heckscheibe umfasst und der Entriegelungsauslöser ist innenseitig in einer unteren Verkleidung, an der eine zugeordnete Heckscheibenkante zu Anlage kommt, angeordnet.

Eine klappbare Heckscheibe ist oftmals bei Gelände- oder Kombifahrzeugen vorgesehen und aufgrund ihres Gewichtes verhältnismäßig leicht zu verschwenken. Bei einer Anordnung des Entriegelungsauslösers in der der klappbaren Heckscheibe zugeordneten unteren Verkleidung ist der Entriegelungsauslöser einfach zu erreichen, wobei gegebenenfalls ein Öffnen der Heckklappe nicht notwendig ist, da stattdessen die leichtere Heckscheibe geöffnet wird.

Bevorzugt umfasst der Entriegelungsauslöser einen schwenkbaren Hebel, der über einen Bowdenzug mit einem Schnappschloss zur Arretierung des Lastenträgers und einer Rückstellfeder gekoppelt ist. Der Hebel mit Bowdenzug ist ein technisch einfaches und preiswertes Mittel, um das Schnappschloss über einen annähernd beliebigen Weg zu betätigen. Die Rückstellfeder sorgt dafür, dass sich der schwenkbare Hebel wieder in die ursprüngliche Ruhelage formschlüssig in den Heckklappen-Aufnahmerahmen einfügt und somit kein störendes Hindernis beim Be- und Entladen des Kofferraums bildet. Die Strecke des Bowdenzugs kann kurz und einfach zu verlegen sein.

Vorzugsweise ist der Entriegelungsauslöser als Modul ausgebildet, das an der Rückwand oder der Verkleidung einhängbar und befestigbar ist. Somit kann der Karosserieaufbau der Ausstattungsvariante des Kraftfahrzeugs mit einem ausziehbaren Lastenträger aus einer Basisversion preiswert und ohne große Änderungen gegenüber der Basiskarosserieversion einfach gefertigt werden.

In einer alternativen Ausführungsform ist der Entriegelungsauslöser als elektrischer Tastschalter ausgebildet, der über elektrische Leitungen mit einem magnetischen Schnappschloss am Lastenträger verbunden ist. Der Tastschalter und das magnetische Schnappschloss sind aus dem Stand der Technik aus vielen technischen Anwendungsbereichen bekannt. Diese Ausführungsform hat den Vorteil, dass relativ große Zugkräfte an dem schwenkbaren Hebel, die vom Benutzer aufgewendet werden müssen, entfallen. Im Weiteren treten keine mechanischen Verschleißerscheinungen am Bowdenzug oder am Federelement auf. Eine Gefahr, dass ein Hindernis aufgrund eines nicht eingezogenen Schwenkhebels besteht, wird durch den Tastschalter ausgeschlossen. Der Tastschalter befindet sich vorteilhafterweise an derselben Position, wie der bereits beschriebene Hebel und ist in einer Mulde in der Verkleidung leicht geneigt oder versenkt eingebaut, um eine unbeabsichtigte Betätigung beim Be- und Entladen des Kofferraums des Kraftfahrzeugs zu vermeiden.

Praktischerweise sind am Lastenträger mehrere arretierbare Positionen vorgesehen, die der Entriegelungsauslöser bei einer Betätigung aufhebt. Die arretierbaren Positionen sind auf jeden Fall der in das Fahrzeugheck eingeschobene Zustand des Lastenträgers und der vollständig ausgezogene Zustand. Vorteilhaft kann auch ein mittlerer ausgezogener Zustand des Lastenträgers sein, wenn dieser beispielsweise als Fahrradträger verwendet wird. Notwendige Verprägungen und Löcher in der Karosserie zur Anbindung des Entriegelungshebelmoduls sind im heckseitigen Karosseriebauteil immer vorhanden, so dass eine Proliferation vermieden wird. Die Verstärkung der Rückwand ist immer ein gleiches Bauteil, egal ob die Fahrzeugkarosserie drei oder fünf Türen aufweist. Die Position des Hebels in der Verkleidung der Rückwand hat den Vorteil, dass das erforderliche Loch für eine Rosette, d.h. die umlaufende Kante für eine Griffmulde, in der sich der Hebel befindet und den Durchgriff des Hebels mit einem minimalen technischen Aufwand realisiert sind. Die Abänderung der Rückwand bzw. deren Verkleidung gegenüber der Fahrzeugbasisversion ohne Lastenträger ist minimal. Der Entriegelungsauslöser ist vorteilhafterweise beim Öffnen der Heckklappe sofort sichtbar und betätigbar.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispiels unter Bezugnahme auf die zugehörigen Zeichnungen näher erläutert. Es zeigt:
- Fig. 1: eine schematische Draufsicht eines erfindungsgemäßen Kraftfahrzeugs mit einem Lastenträger und einem Entriegelungsauslöser,
- Fig. 2: eine Seitenschnittansicht des Entriegelungsauslösers im eingebauten Zustand,
- Fig. 3: einen Schnitt gemäß der Linie III-III nach Fig. 2,
- Fig. 4: eine Seitenansicht eines Entriegelungshebelmoduls,
- Fig. 5: eine Draufsicht auf das Entriegelungshebelmoduls nach Fig. 4,
- Figur 6: eine Rückansicht des Entriegelungshebelmoduls nach Fig. 4.

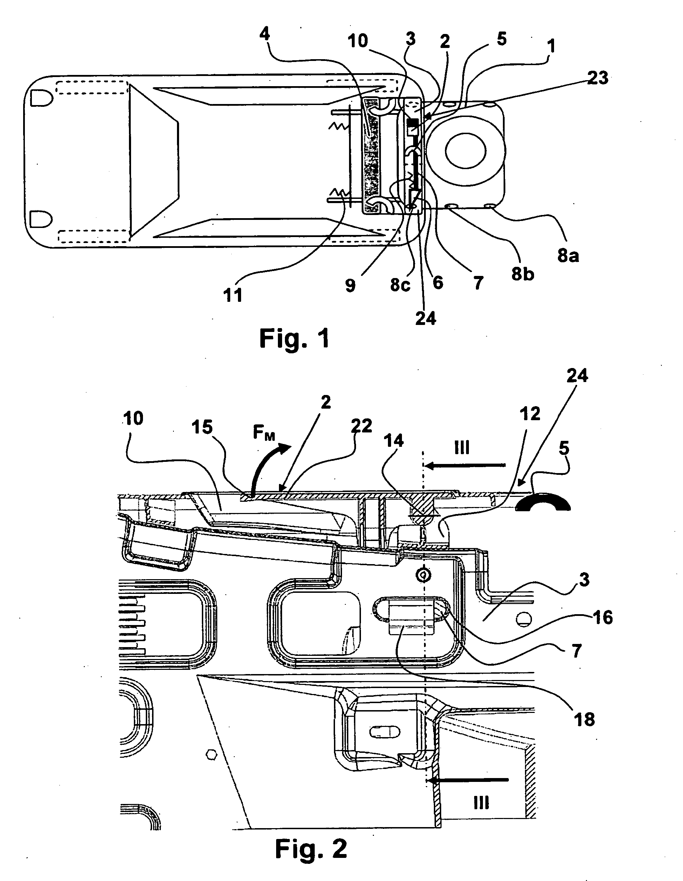

Das Kraftfahrzeug umfasst einen ausziehbaren heckseitigen Lastenträger 1 und eine Heckklappe 4, die geöffnet dargestellt ist. Ein Entriegelungsauslöser 2 für den Lastenträger 1 ist in einem Falzbereich 24 einer Rückwand 23 des Kraftfahrzeuges angeordnet, d. h. in einem karosserieseitigen Heckklappen-Aufnahmerahmen 3, wobei der Falzbereich 24 bei geschlossener Heckklappe 4 durch dieselbe abgedeckt ist. Der Rückwand 23 ist eine entsprechende Verkleidung 21 zugeordnet. Da üblicherweise mittig in der Rückwand 23 ein Heckklappenschloss 5 in dem Heckklappen-Aufnahmerahmen 3 eingebaut ist, ist der Entriegelungsauslöser 2 außermittig in diesen eingepasst. Der Entriegelungsauslöser 2 umfasst im Wesentlichen einen mechanischen Hebel 22, der über einen Bowdenzug 7 mit einem Schnappschloss 6 verbunden ist, das mit einer Arretierung 8a des Lastenträgers 1 zusammenwirkt, um den Lastenträger 1 in seinem in das Fahrzeugheck eingeschobenen Zustand zu fixieren. Für die Verwendung des Lastenträgers 1 als Fahrradträger, weist dieser eine weitere Arretierung 8b zur Festlegung im halb ausgezogenen Zustand und eine darüber hinausgehende Arretierung 8c zur Halterung im vollständig ausgezogenen Zustand auf, um einen sicheren und stabilen Transport von Gegenständen auf dem Lastenträger 1 zu gewährleisten. Nach Fig. 1 befindet sich der Lastenträger 1 im vollständig ausgezogenen Zustand. Der Verlauf des Bowdenzugs 7 zum Schnappschloss 6 am Lastenträger 1 ist optimiert kurz und spart deshalb zum einen Material und vermindert zum anderen Verschleißerscheinungen.

Am Schnappschloss 6 wirkt eine Rückstellfeder 9, die mit dem Hebel 2 des Entriegelungsauslösers 2 über den Bowdenzug 7 gekoppelt ist und den Hebel 22 nach seiner Betätigung zur Beaufschlagung des Schnappschlosses 6 wieder in die Ruhelage in eine Griffmulde 10 in der Verkleidung 21 der Rückwand bzw. des Heckklappen-Aufnahmerahmens 3 zurückzieht. Dadurch wird ein aufstehendes Hindernis durch einen nicht zurückgestellten Hebel 22 an der Be- und Entladeöffnung zum Kofferraum des Kraftfahrzeugs vermieden. Der Lastenträger 1 ist auf zwei Schienen gelagert und im eingeschobenen Zustand mittels Vorspannfedern 11 gegen das Schnappschloss 6 vorgespannt. Wird der Hebel 22 bei einem manuellen Eingreifen in die Griffmulde 10 nach oben gezogen, erfolgt ein kurzzeitiges Öffnen des Schnappschlosses 6, damit es außer Eingriff mit der Arretierung 8a gelangt, worauf der Lastenträger 2 aus seiner eingeschobenen Position in eine zumindest teilweise ausgezogene Position gleitet, da der Lastenträger 1 durch die Vorspannfedern 11 aus dem Fahrzeugheck gedrückt wird. Sonach kommt der Lastenträger 1 dem Benutzer nach dem Öffnen des Schnappschlosses 6 heckseitig entgegen und kann bis zur gewünschten arretierbaren Stellung ausgezogen werden.

Die Position des Hebels 22 hat den Vorteil, dass ein beladener Kofferraum nicht zu seiner Betätigung ausgeräumt werden muss, da der Hebel 22 griffgünstig und frei im hinteren Bereich des Kofferraums positioniert ist. Darüber hinaus ist der Hebel 22 bei geöffneter Heckklappe 4 für den Benutzer sofort sichtbar.

Gemäß Fig. 2 befindet sich der Hebel 22 des Entriegelungsauslösers 2 in der Verkleidung 21 des äußeren Heckklappen-Aufnahmerahmens 3 in seiner Ruhelage. Der Hebel 22 ist auf einem Träger 12 gelagert und an einem unteren Ende des Hebels 2 befindet sich ein zapfenartiger Bolzen 13 der mit dem Träger 12 ein Schwenkgelenk 14 bildet. Auf dem gegenüberliegenden Längsende des Hebels 22 ist das Ende frei umgreifbar, so dass ein Hebelarm 15 zur Reduzierung der anzuwendenden Zugkraft ausgebildet ist. Um den Hebel 22 umgreifen zu können, ist die Griffmulde 10 aus einem Kunststoff in der Verkleidung vorgesehen. Seitlich von dem Hebel 22 ist mittig in der Breite des Kraftfahrzeugs das Heckklappenschloss 5 montiert, das in Fig. 2 lediglich schematisiert dargestellt ist. An dem Hebel 22 ist der Bowdenzug 7 befestigt, der gezogen wird, wenn der Hebel 22 um die Schwenkachse des Schwenkgelenks 14 entsprechend dem Pfeil F_{M} noch oben gezogen wird.

Der als Modul dargestellte Entriegelungsauslöser 2 ist auf dem Träger 12 montiert, der an dem Heckklappen-Aufnahmerahmen 3 über mehrere Punkte festgelegt ist. Der Träger 12 wird in ein Langloch 16 des Heckklappen-Aufnahmerahmens 3 eingesteckt, wobei das Langloch 16 unabhängig davon eingestanzt ist, ob das Kraftfahrzeug die Zusatzausstattung eines heckseitigen Lastenträgers 1 erhält oder nicht. Das Langloch 16 wird mit einer Blende verdeckt, wenn das Kraftfahrzeug ohne Lastenträger ausgestattet ist und daher keinen Entriegelungsauslöser 2 aufweist.

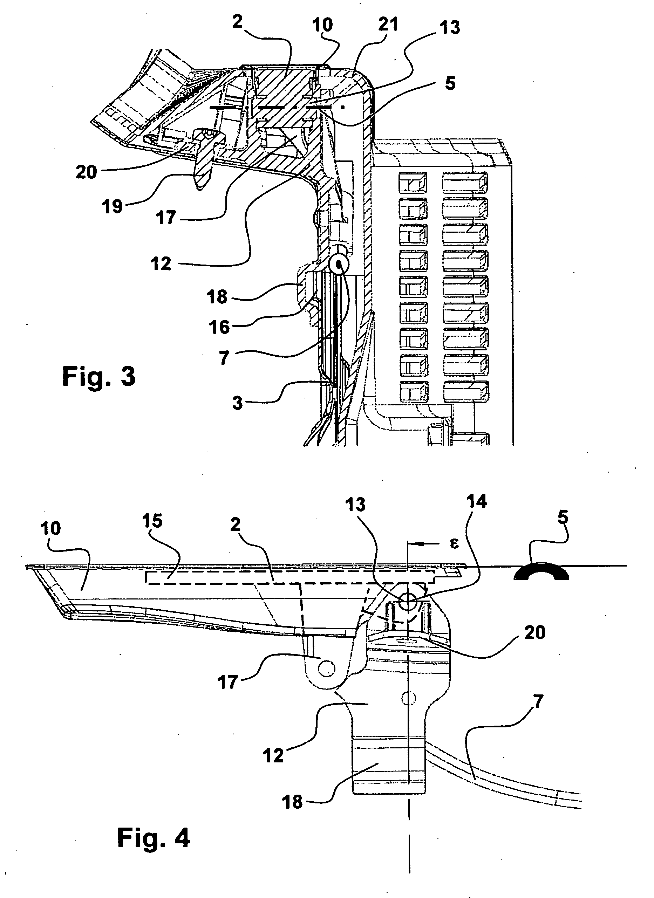

Der Hebel 22 des Entriegelungsauslösers 2 ist gemäß Fig. 3 einstückig mit dem zapfenartigen Bolzen 13 ausgebildet, der in einem Schwenklager des Trägers 12 einliegt und die Schwenkachse bildet. An dem Hebel 22 befindet sich ein Betätigungsarm 17 mit einer Bohrung, in der der Bowdenzug 7 befestigt ist. Der Bowdenzug 7 ist in der Fig. 3 aus der Zeichenebene senkrecht herausgehend dargestellt. Der Träger 12 weist einen im Querschnitt gesehen C-förmigen Stützfuß 18 auf, der in das Langloch 16 des Heckklappen-Aufnahmerahmens 3 eingehängt ist. Mit einer Befestigungsschraube 19 ist der Träger 12 karosserieseitig an dem Heckklappen-Aufnahmerahmen 3 festgelegt. Die Griffmulde 10 mit ihrem umlaufenden Bund, auch Rosette genannt, schließt das gestanzte Langloch 16 der Verkleidung 21 ab.

Die Griffmulde 10 verdeckt gemäß Fig. 4 den mit gestrichelter Linie dargestellten Hebel 22. Der Betätigungsarm 17, an dem der Bowdenzug 7 befestigt ist, sowie der Bolzen 13 sind mit durchgezogener Linie gezeichnet. Nach Fig. 4 ist der Stützfuß 18 sowie ein abstehender Befestigungsflansch 20 des Trägers 12 auf einer Ebene zur Schwenkachse des Hebels 22 zu sehen. Das Heckklappenschloss 5 ist linksseitig schematisch angedeutet.

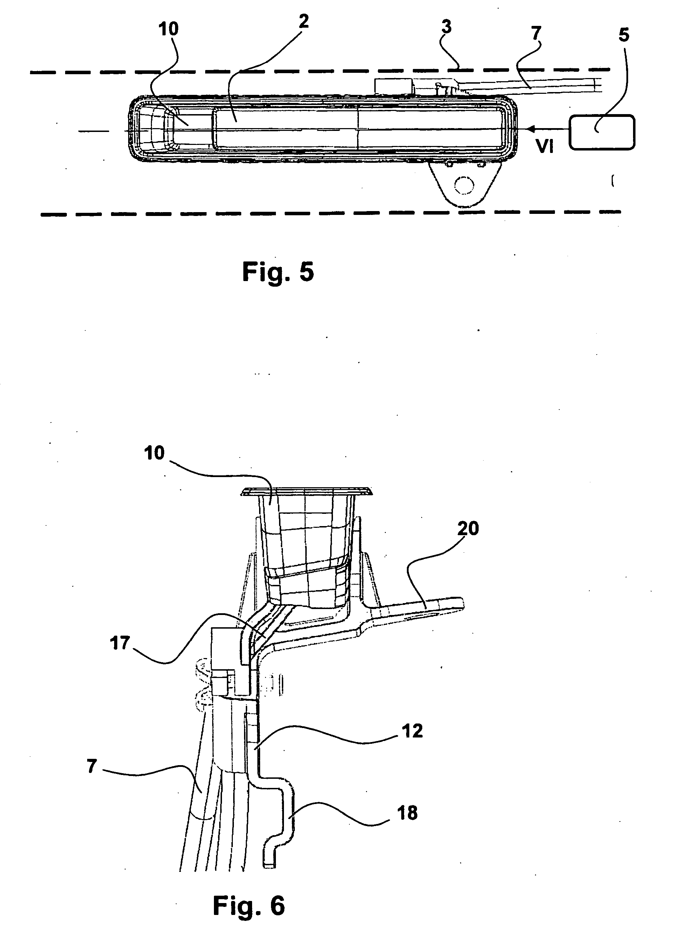

Nach Fig. 5 ist die Außenkontur der Verkleidung 21 des Heckklappen-Aufnahmerahmens 3 mit gestrichelten Linien angedeutet und bildet den Falzbereich 24 aus, der von der Heckklappe 4 im geschlossenen Zustand verdeckt wird. Schematisch ist linksseitig das Heckklappenschloss 5 eingezeichnet.

Die Darstellung nach Fig. 6 zeigt den Entriegelungsauslöser 2, den Träger 12 mit dem Stützfuß 18 und dem Befestigungsflansch 20, die Griffmulde 10 und den darin angeordneten verdeckten Hebel 22, der an der rechten Seite den Betätigungsarm 17 aufweist, an dem der Bowdenzug 7 befestigt ist.

Nachfolgend ist die Funktionsweise des Entriegelungsauslösers 2 erläutert. Um den Lastenträger 1 aus seiner im Fahrzeugheck eingeschobenen Lage zu entriegeln, muss der Benutzer in die Griffmulde 10 greifen und den Hebelarm 15 des Hebels 22 aus der Ruhelage herausschwenken. Der Hebel 2 zieht an dem Betätigungsarm 17, an dem der mit dem Schnappschloss 6 verbundene Bowdenzug 7 befestigt ist. Das Schnappschloss 6 sichert den Lastenträger 1 im eingeschobenen Zustand und auch in den weiteren verschieden weit ausgezogenen Positionen.

### Bezugszeichenliste

- 1.: Lastenträger
- 2.: Entriegelungsauslöser
- 3.: Heckklappen-Aufnahmerahmen,
- 4.: Heckklappe
- 5.: Heckklappenschloss
- 6.: Schnappschloss
- 7.: Bowdenzug
- 8a.: Arretierung
- 8b.: Arretierung
- 8c.: Arretierung
- 9.: Rückstellfeder
- 10.: Griffmulde
- 11.: Vorspannfeder
- 12.: Träger
- 13.: Bolzen
- 14.: Schwenkgelenk
- 15.: Hebelarm
- 16.: Langloch
- 17.: Betätigungsarm
- 18.: Stützfuß
- 19.: Befestigungsschraube
- 20.: Befestigungsflansch
- 21.: Verkleidung
- 22.: Hebel
- 23.: Rückwand
- 24.: Falzbereich

## Patentansprüche

1. Kraftfahrzeug mit einem Entriegelungsauslöser (2) für einen heckseitig ausziehbaren Lastenträger (1), der im eingeschobenen und ausgezogenen Zustand mittels Arretiermitteln (6, 11) fixiert ist, die mit dem Entriegelungsauslöser (2) in Wirkverbindung stehen, und einer gegen eine eine Verkleidung (21) aufweisende Rückwand (23) anliegenden Heckklappe (4) zum Verschließen einer Heckklappenöffnung, **dadurch gekennzeichnet, dass** der Entriegelungsauslöser (2) in der Verkleidung (21) der Rückwand (23) im unteren Bereich der Heckklappenöffnung, in einem einer Unterkante der Heckklappe (4) zugeordneten Falzbereich (24) der Rückwand (23) angeordnet ist, wobei der Falzbereich (24) bei geschlossener Heckklappe (4) durch dieselbe abgedeckt ist.

2. Kraftfahrzeug nach Anspruch 2, **dadurch gekennzeichnet, dass** sich der Entriegelungsauslöser (2) seitlich von einem mittigen Heckklappenschloss (5) befindet.

3. Kraftfahrzeug nach dem Oberbegriff des Anspruchs 1, **dadurch gekennzeichnet, dass** die Heckklappe (4) als Heckscheibe ausgebildet ist oder eine klappbare Heckscheibe umfasst und der Entriegelungsauslöser (2) innenseitig in einer unteren Verkleidung, an der eine zugeordnete Heckscheibenkante zu Anlage kommt, angeordnet ist.

4. Kraftfahrzeug nach einem der Ansprüche 1 bis 3, **dadurch gekennzeichnet, dass** der Entriegelungsauslöser (2) einen schwenkbaren Hebel (22) umfasst, der über einen Bowdenzug (7) mit einem Schnappschloss (6) zur Arretierung des Lastenträgers (1) und einer Rückstellfeder (9) gekoppelt ist.

5. Kraftfahrzeug nach einem der Ansprüche 1 bis 4, **dadurch gekennzeichnet, dass** der Entriegelungsauslöser (2) als Modul ausgebildet ist, das an der Rückwand (23) oder der Verkleidung (21) einhängbar und befestigbar ist.

6. Kraftfahrzeug nach einem der Ansprüche 1 bis 4, **dadurch gekennzeichnet, dass** der Entriegelungsauslöser (2) als elektrischer Tastschalter ausgebildet ist, der über elektrische Leitungen mit einem elektromagnetischen Schnappschloss (6) am Lastenträger (1) verbunden ist.

7. Kraftfahrzeug nach einem der Ansprüche 1 bis 7, **dadurch gekennzeichnet, dass** am Lastenträger (1) mehrere arretierbare Positionen (8a, 8b, 8c) vorgesehen sind, die der Entriegelungsauslöser (2) bei einer Betätigung aufhebt.

## Claims

1. A motor vehicle with a release actuator (2) for a rear carrier (1) that can be extended on the rear side and is fixed by means of arresting means (6, 11) in the inserted and extended state, which means are in operative connection with the release actuator (2), and a tailgate (4) which rests against a rear wall (23) having a covering (21) for closing off a tailgate opening, **characterized in that** the release actuator (2) is arranged in the covering (21) of the rear wall (23) in the bottom region of the tailgate opening in a seam joint region (24) of the rear wall (23) associated with the bottom edge of the tailgate (4), with the seam joint region (24) being covered by the tailgate (4) when the same is closed.

2. A motor vehicle according to claim 2, **characterized in that** the release actuator (2) is disposed laterally from a central tailgate lock (5).

3. A motor vehicle according to the preamble of claim 1, **characterized in that** the tailgate (4) is arranged as a rear window or comprises a foldable rear window, and the release actuator (2) is arranged on the inside in a bottom covering on which an associated edge of the rear window comes to rest.

4. A motor vehicle according to one of the claims 1 to 3, **characterized in that** the release actuator (2) comprises a swivelable lever (22) which is coupled via a Bowden cable (7) with a snap lock (6) for arresting the rear carrier (1) and a return spring (9).

5. A motor vehicle according to one of the claims 1 to 4, **characterized in that** the release actuator (2) is arranged as a module which can be hooked into the rear wall (23) or the covering (21) and can be fastened.

6. A motor vehicle according to one of the claims 1 to 4, **characterized in that** the release actuator (2) is arranged as an electric pushbutton switch which is connected via electric lines with an electromagnetic snap lock (6) on the rear carrier (1).

7. A motor vehicle according to one of the claims 1 to 7, **characterized in that** several arrestable positions (8a, 8b, 8c) are provided on the rear carrier (1) which are released by the release actuator (2) upon actuation.

## Revendications

1. Véhicule à moteur avec un déclencheur de déverrouillage (2) pour un porte-charge (1) pouvant être déployé à l'arrière, qui est fixé dans l'état rétracté et déployé au moyen de moyens de blocage (6, 11) en liaison active avec le déclencheur de déverrouillage (2), et avec un volet arrière (4) reposant contre une paroi arrière (23) présentant un habillage (21) pour fermer une ouverture de volet arrière, **caractérisé en ce que** le déclencheur de déverrouillage (2) est disposé dans l'habillage (21) de la paroi arrière (23) dans la partie inférieure de l'ouverture de volet arrière, dans une zone de pli (24) de la paroi arrière (23) associée à un bord inférieur du volet arrière (4), laquelle zone de pli (24) est recouverte par le volet arrière (4) quand celui-ci est fermé.

2. Véhicule à moteur selon la revendication 2, **caractérisé en ce que** le déclencheur de déverrouillage (2) se trouve sur le côté par rapport à une serrure de volet arrière (5) placée au milieu.

3. Véhicule à moteur selon le préambule de la revendication 1, **caractérisé en ce que** le volet arrière (4) est conformé comme une vitre arrière ou comprend une vitre arrière rabattable et le déclencheur de déverrouillage (2) est disposé à l'intérieur dans un habillage inférieur sur lequel un bord de vitre arrière associé vient reposer.

4. Véhicule à moteur selon l'une des revendications 1 à 3, **caractérisé en ce que** le déclencheur de déverrouillage (2) comprend un levier pivotant (22) qui est couplé par un câble Bowden (7) à une serrure à cliquet (6) pour le blocage du porte-charge (1) et d'un ressort de rappel (9).

5. Véhicule à moteur selon l'une des revendications 1 à 4, **caractérisé en ce que** le déclencheur de déverrouillage (2) est conçu comme un module qui peut être accroché et fixé à la paroi arrière (23) ou à l'habillage (21).

6. Véhicule à moteur selon l'une des revendications 1 à 4, **caractérisé en ce que** le déclencheur de déverrouillage (2) est conçu comme un contacteur électrique qui est relié par des lignes électriques à une serrure à cliquet (6) électromagnétique sur le porte-charge (1).

7. Véhicule à moteur selon l'une des revendications 1 à 7, **caractérisé en ce que** sont prévues sur le porte-charge (1) plusieurs positions blocables (8a, 8b, 8c) que le déclencheur de déverrouillage (2) inhibe lorsqu'il est actionné.
